# EUROPEAN PATENT SPECIFICATION

(11) **EP 4 431 885 B1**
(45) Date of publication and mention of the grant of the patent: **17.06.2026**
(21) Application number: 24162549.0
(22) Date of filing: 11.03.2024
(51) Int. Cl.: G01G 19/393

(54) **COMBINATION WEIGHING APPARATUS**
KOMBINATIONSWIEGEVORRICHTUNG
APPAREIL DE PESAGE COMBINATOIRE

(30) Priority: 13.03.2023 JP 2023038508
(43) Date of publication of application: 18.09.2024
(73) Proprietor: Ishida Co., Ltd., Kyoto-shi Kyoto 606-8392 (JP)
(72) Inventor: OBAYASHI, Yujiro, Ritto-shi, Shiga 520-3026 (JP)
(74) Representative: Gill Jennings & Every LLP

(56) References cited:
- EP-A1- 4 001 860

## Description

### TECHNICAL FIELD

The present invention relates to a combination weighing apparatus.

### BACKGROUND ART

Conventionally, a combination weighing apparatus in which a shutter structure is provided on a conveyance surface of a distribution table, a supply trough, a hopper, a discharge chute or the like is known.

EP 4 001 860 A1 discloses a combination weighing apparatus with an anti-adhesion discharge chute.

### SUMMARY OF THE INVENTION

However, in the conventional combination weighing apparatus, an opening is provided in the above-described conveyance surface, and thus, there is a problem that drips (moisture such as meat juice and sauce) of an article leak.

Therefore, the present invention has been made in view of the above problems, and an object of the present invention is to provide a combination weighing apparatus capable of preventing functional deterioration due to moisture leaked from articles or drying of such moisture, and improving cleaning performance even in a case where an opening is provided in a conveyance surface.

A combination weighing apparatus according to an embodiment is summarized as a combination weighing apparatus having: a conveyance unit that receives articles given from an outside and conveys the articles downstream; a plurality of hoppers that include first gates, temporarily receive the articles conveyed from the conveyance unit by closing the first gates, and discharge the articles downstream by opening the first gates; an acquisition unit that acquires a weight value of the article stored in each of the plurality of hoppers; a control unit that performs combination calculation based on a plurality of the weight values acquired by the acquisition unit and discharges a combination of the articles having a preset target weight value from the hoppers; a discharge chute that receives the articles discharged from the hoppers, has a conveyance surface having a plurality of openings smaller than the article, and discharges the articles downstream while sliding the articles on the conveyance surface; and a moisture recovery mechanism that is disposed below the openings in the discharge chute and recovers moisture passing through the openings in the discharge chute from an inside to an outside of the conveyance surface and falling from the discharge chute.

According to the present invention, it is possible to provide a combination weighing apparatus capable of preventing functional deterioration due to moisture leaked from articles or drying of such moisture, and improving cleaning performance even in a case where an opening is provided in a conveyance surface.

### BRIEF DESCRIPTION OF DRAWINGS

FIG. 1 is a diagram for describing an example of an overall configuration of a combination weighing apparatus 1 according to a first embodiment;
FIG. 2 is a diagram for describing an example of a conveyance surface 90 of a discharge chute 9 of the combination weighing apparatus 1 according to the present embodiment;
FIG. 3 is a diagram for describing the example of the conveyance surface 90 of the discharge chute 9 of the combination weighing apparatus 1 according to the present embodiment;
FIG. 4 is a diagram for describing an example of a moisture recovery mechanism 20 of the combination weighing apparatus 1 according to the present embodiment; and
FIG. 5 is a diagram for describing an example of a combination weighing apparatus 1 according to Modification 1.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

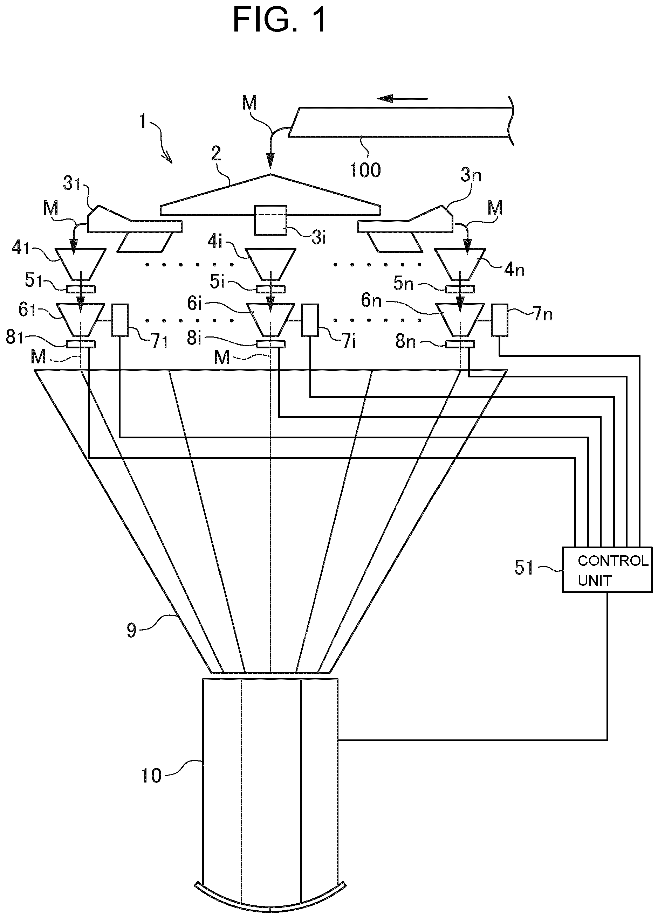

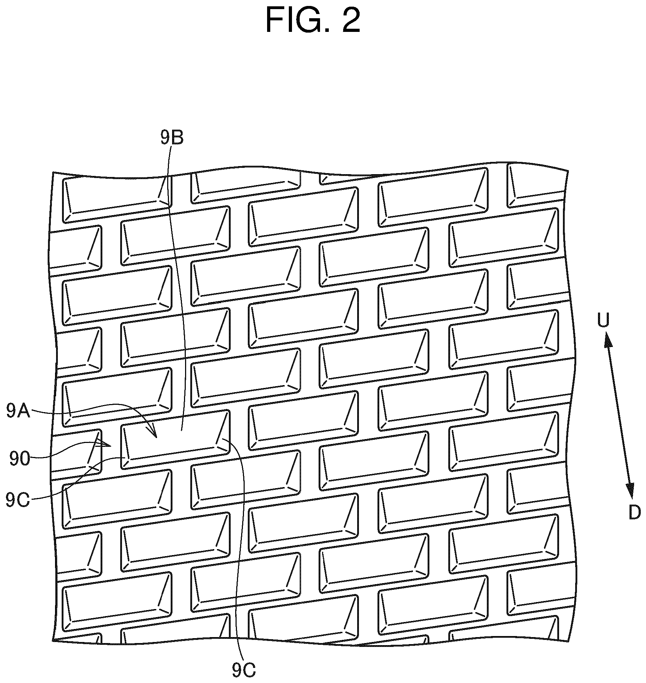

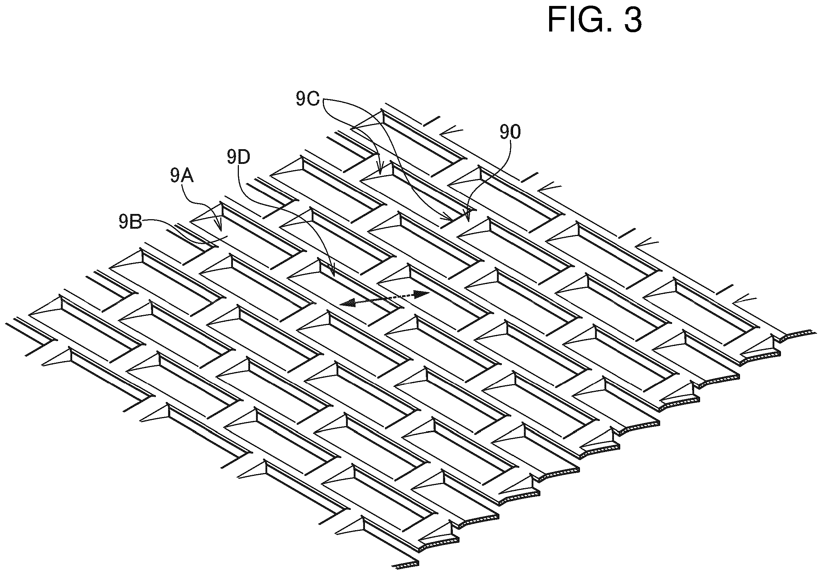

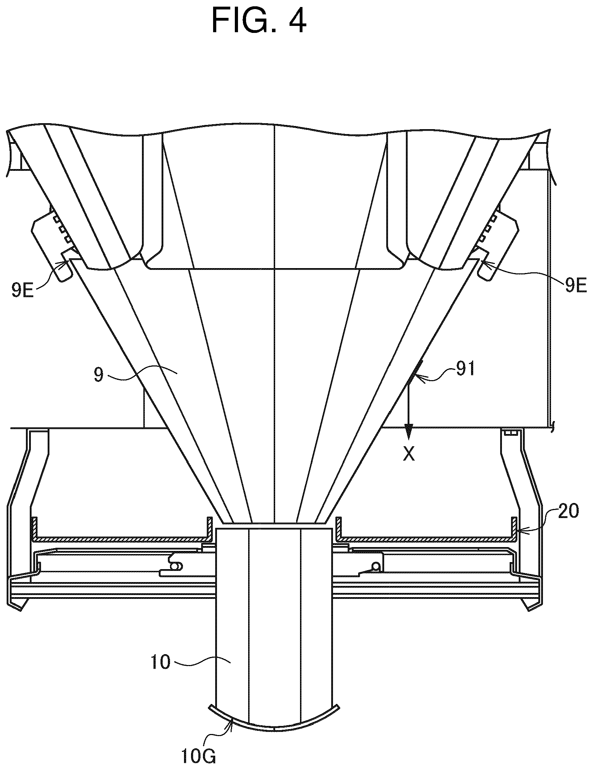

Hereinafter, a combination weighing apparatus 1 according to a first embodiment of the present invention will be described with reference to FIGS. 1 to 4. FIG. 1 is a diagram illustrating an example of an overall configuration of the combination weighing apparatus 1 according to the present embodiment, FIGS. 2 and 3 are diagrams for describing an example of a conveyance surface 90 of a discharge chute 9 of the combination weighing apparatus 1 according to the present embodiment, and FIG. 4 is a diagram for describing an example of a moisture recovery mechanism 20 of the combination weighing apparatus 1 according to the present embodiment.

As illustrated in FIG. 1, the combination weighing apparatus 1 according to the present embodiment includes a distribution table 2, supply troughs 3₁ to 3ₙ, pool hoppers 4₁ to 4ₙ, weighing hoppers 6₁ to 6ₙ, the discharge chute 9, a timing hopper 10, a control unit 51, and the moisture recovery mechanism 20.

As illustrated in FIG. 1, a conveyor 100 drops articles M, which are objects to be weighed, to a central portion of the distribution table 2 of the combination weighing apparatus 1.

The distribution table 2 and each of the supply troughs 3₁ to 3ₙ are each vibrated by the drive of a vibrator, so that the articles M on the distribution table 2 are supplied to the multiple pool hoppers 4₁ to 4ₙ provided downstream of the supply troughs 3₁ to 3ₙ, respectively.

Here, the distribution table 2 and the supply troughs 3₁ to 3ₙ constitute a conveyance unit that receives the articles M given from the outside (the conveyor 100) and conveys the articles M downstream.

The pool hoppers 4₁ to 4ₙ are provided with gates 5₁ to 5ₙ, respectively, and temporarily house and store the articles M supplied and received from the corresponding supply troughs 3₁ to 3ₙ, respectively.

The weighing hoppers 6₁ to 6ₙ are provided downstream of the pool hoppers 4₁ to 4ₙ, respectively. The respective weighing hoppers 6₁ to 6ₙ are provided with weighing headers including weight detectors 7₁ to 7ₙ for weighing the articles M given from the pool hoppers 4₁ to 4ₙ and gates (first gates) 8₁ to 8ₙ.

That is, the respective weighing hoppers 6₁ to 6ₙ temporarily receive the articles M conveyed from the respective supply troughs 3₁ to 3ₙ by closing the gates 8₁ to 8ₙ, respectively, and discharge the articles M downstream by opening the gates 8₁ to 8ₙ.

Here, the weight detectors 7₁ to 7ₙ constitute an acquisition unit that acquires a weight value of the article M stored in each of the plurality of weighing hoppers 6₁ to 6ₙ.

The discharge chute 9 is provided below the gates 8₁ to 8ₙ of the respective weighing hoppers 6₁ to 6ₙ. The timing hopper 10 is disposed below the discharge chute 9.

The control unit 51 performs combination calculation based on a plurality of weight values acquired by the respective weight detectors 7₁ to 7ₙ, and discharges a combination of the articles M having a preset target weight value from the weighing hoppers 6₁ to 6ₙ.

The discharge chute 9 has the conveyance surface 90, receives the articles M discharged from the respective weighing hoppers 6₁ to 6ₙ, and discharges the articles M downstream (the timing hopper 10) while sliding the articles M on the conveyance surface 90.

FIG. 2 is a diagram illustrating a configuration when the conveyance surface 90 is visually recognized from the front surface to the back surface.

As illustrated in FIG. 2, the inside of the conveyance surface 90 may be subjected to shutter processing. Such shutter processing may be louver processing.

That is, the conveyance surface 90 may have a protrusion 9A protruding from the outside toward the inside of the discharge chute 9. As illustrated in FIG. 2, the protrusion 9A may be a flat inclined surface.

Specifically, the protrusion 9A is formed of three continuous flat surfaces. The flat surfaces include a flat trapezoidal main surface 9B and two side surfaces 9C formed to be continuous with the main surface 9B. Here, the main surface 9B and the two side surfaces 9C are connected to the conveyance surface 90.

In summary, as illustrated in FIG. 2, a plurality of protrusions 9A protrude from the conveyance surface 90 from an upstream direction U toward a downstream direction D.

FIG. 3 is a diagram for describing a configuration when the conveyance surface 90 is viewed from the back surface to the front surface.

As illustrated in FIG. 3, a plurality of openings 9D smaller than the above-described article M are provided in the conveyance surface 90. That is, the opening 9D directed from the front surface to the back surface of the conveyance surface 90 is formed at a lower end of each protrusion 9A in the downstream direction D (a conveyance direction of the article M).

In other words, as illustrated in FIGS. 2 and 3, an end portion of the main surface 9B in the downstream direction D protrudes from the conveyance surface 90, and the opening 9D is formed between the main surface 9B and the conveyance surface 90.

As illustrated in FIG. 4, the moisture recovery mechanism 20 is disposed below the opening 9D in the discharge chute 9 and recovers moisture X passing through the opening 9D in the discharge chute 9 from the inside to the outside of the conveyance surface 90 and falling from the discharge chute 9.

In the above configuration, there is a possibility that moisture (drip) contained in the article M flows backward due to an impact when the article M falls into the discharge chute 9, and the moisture leaks from the inside to the outside of the conveyance surface 90 through the opening 9D formed at the end portion of the conveyance surface 90 of the discharge chute 9 in the downstream direction D as illustrated in FIG. 4. However, with the above-described configuration, the leaked moisture can be recovered by the moisture recovery mechanism 20.

As illustrated in FIG. 4, the moisture recovery mechanism 20 may extend more outward than an outer edge portion 9E of an upper end of the discharge chute 9. With such a configuration, moisture leaking from the discharge chute 9 can be more reliably recovered.

Further, in addition to the configuration illustrated in FIG. 4, among end portions of the moisture recovery mechanism 20, an end portion located on an inner side of the combination weighing apparatus 1 may be configured to be in contact with the discharge chute 9. Moisture leaked from the discharge chute 9 not only freely falls from the discharge chute 9 but also moves downstream along an outer surface of the discharge chute 9. Among the end portions of the moisture recovery mechanism 20, the end portion located on the inner side of the combination weighing apparatus 1 is configured to be in contact with the discharge chute 9 to recover such moisture. With this configuration, moisture moving downstream along the outer surface of the discharge chute 9 can be prevented from falling into the timing hopper 10, and a risk of mixing of foreign matter can be reduced.

### (Modification 1)

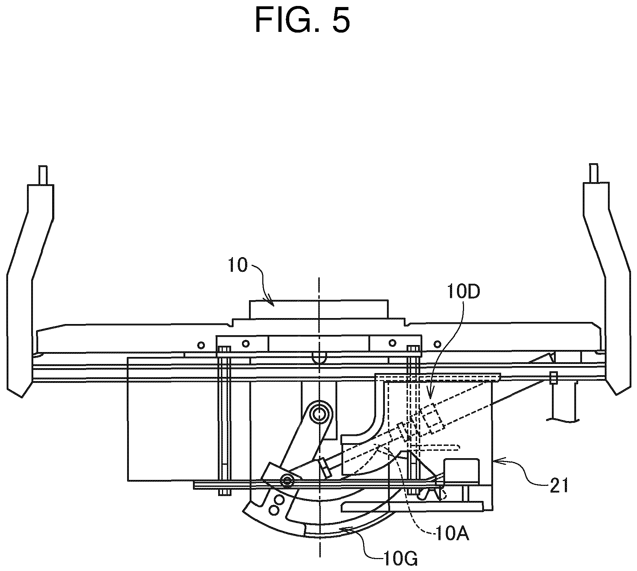

Hereinafter, Modification 1 of the present invention will be described focusing on differences from the first embodiment described above with reference to FIG. 5.

As illustrated in FIG. 5, a timing hopper 10 includes a gate (second gate) 10G, temporarily receives an article M discharged from a discharge chute 9 by closing the gate 10G, and further discharges the article M downstream by opening the gate 10G.

As illustrated in FIG. 5, a moisture recovery mechanism 21 in Modification 1 is configured using a cover that protects a drive unit 10D that drives the gate 10G.

With such a configuration, it is possible to prevent performance deterioration of a combination weighing apparatus 1 by protecting the drive unit 10D whose function is highly likely to be affected by moisture leaked from the discharge chute 9.

Here, as illustrated in FIG. 5, the moisture recovery mechanism 21 may protect an inner cylinder 10A of an air cylinder constituting the drive unit 10D.

With such a configuration, it is possible to protect the air cylinder whose performance deteriorates particularly when moisture leaked from the discharge chute 9 adheres.

According to the present embodiment, even in a case where an opening 9D is provided in a conveyance surface 90 of the discharge chute 9, it is possible to prevent functional deterioration due to moisture leaked from the article M and to improve cleaning performance.

### REFERENCE SIGNS LIST

1 Combination weighing apparatus
2 Distribution table
3₁ to 3ₙ Supply trough
4₁ to 4ₙ Pool hopper
5₁ to 5ₙ, 8₁ to 8ₙ, 10G Gate
6₁ to 6ₙ Weighing hopper
7₁ to 7ₙ Acquisition unit
9 Discharge chute
90 Conveyance surface
9A Protrusion
9B Main surface
9C Side surface
9D Opening
10 Timing hopper
10A Inner cylinder
10D Drive unit
20, 21 Moisture recovery mechanism
51 Control unit
100 Conveyor
M Article
X Moisture

## Claims

1. A combination weighing apparatus (1) comprising:
a conveyance unit that receives articles (M) given from an outside and conveys the articles (M) downstream;
a plurality of hoppers (6₁ to 6ₙ) that include first gates, temporarily receive the articles (M) conveyed from the conveyance unit by closing the first gates (8₁ to 8ₙ), and discharge the articles (M) downstream by opening the first gates (8₁ to 8ₙ);
an acquisition unit (7₁ to 7ₙ) that acquires a weight value of the article stored in each of the plurality of hoppers (6₁ to 6ₙ);
a control unit (51) that performs combination calculation based on a plurality of the weight values acquired by the acquisition unit (7₁ to 7ₙ) and discharges a combination of the articles (M) having a preset target weight value from the hoppers (6₁ to 6ₙ);
a discharge chute (9) that receives the articles (M) discharged from the hoppers (6₁ to 6ₙ), has a conveyance surface (90) having a plurality of openings (9D) smaller than the article, and discharges the articles (M) downstream while sliding the articles (M) on the conveyance surface (90); and
**characterized by**:
a moisture recovery mechanism that is disposed below the openings in the discharge chute (9) and recovers moisture passing through the openings in the discharge chute (9) from an inside to an outside of the conveyance surface (90) and falling from the discharge chute (9).

2. The combination weighing apparatus (1) according to claim 1, wherein
the moisture recovery mechanism (20) extends more outward than an outer edge portion (9E) of an upper end of the discharge chute (9).

3. The combination weighing apparatus (1) according to claim 1 or claim 2, further comprising a timing hopper (10) that includes a second gate (10G), temporarily receives the articles (M) discharged from the discharge chute (9) by closing the second gate (10G), and discharges the articles (M) downstream by opening the second gate (10G), wherein
the moisture recovery mechanism (20) is configured using a cover that protects a drive unit (10D) that drives the second gate (10G).

4. The combination weighing apparatus (1) according to claim 3, wherein
the moisture recovery mechanism (20) protects an inner cylinder (10A) of an air cylinder constituting the drive unit (10D).

5. The combination weighing apparatus (1) according to any of claims 1 to 4, wherein
the conveyance surface (90) has a protrusion (9A) protruding from an outside toward an inside of the discharge chute (9), and
the opening (9D) is formed at a lower end of the protrusion (9A) in a conveyance direction (D) of the articles (M).

## Patentansprüche

1. Kombinationswiegevorrichtung (1), die aufweist:
eine Fördereinheit, die von außen eingebene Artikel (M) aufnimmt und die Artikel (M) stromabwärts befördert;
mehrere Trichter (6₁ bis 6ₙ), die erste Tore aufweisen, die vorübergehend die von der Fördereinheit geförderten Artikel (M) durch Schließen der ersten Tore (8₁ bis 8₂) aufnehmen und die Artikel (M) stromabwärts durch Öffnen der ersten Tore (8₁ bis 8₁) abgeben;
eine Erfassungseinheit (7₁ bis 7ₙ), die einen Gewichtswert des Artikels erfasst, der in jedem der mehreren Trichter (6₁ bis 6ₙ) gespeichert ist;
eine Steuereinheit (51), die eine Kombinationsberechnung basierend auf mehreren der von der Erfassungseinheit (7₁ bis 7ₙ) erfassten Gewichtswerte durchführt und eine Kombination der Artikel (M) mit einem voreingestellten Zielgewichtswert aus den Trichtern (6₁ bis 6ₙ) abgibt;
eine Abgaberutsche (9), die die aus den Trichtern (6₁ bis 6ₙ) abgegebenen Artikel (M) aufnimmt, eine Förderfläche (90) mit mehreren Öffnungen (9D) aufweist, die kleiner als der Artikel sind, und die Artikel (M) stromabwärts abgibt, während die Artikel (M) auf der Förderfläche (90) gleiten; und
**gekennzeichnet durch**:
einen Feuchtigkeitsrückgewinnungsmechanismus, der unter den Öffnungen in der Abgaberutsche (9) angeordnet ist und Feuchtigkeit zurückgewinnt, die durch die Öffnungen in der Abgaberutsche (9) von einer Innenseite zu einer Außenseite der Förderfläche (90) hindurchtritt und von der Abgaberutsche (9) fällt.

2. Kombinationswiegevorrichtung (1) nach Anspruch 1, wobei der Feuchtigkeitsrückgewinnungsmechanismus (20) sich weiter nach außen erstreckt als ein äußerer Kantenabschnitt (9E) eines oberen Endes der Abgaberutsche (9).

3. Kombinationswiegevorrichtung (1) nach Anspruch 1 oder Anspruch 2, die ferner einen Zeitsteuerungstrichter (10) aufweist, der ein zweites Tor (10G) aufweist, das die von der Abgaberutsche (9) abgegeben Artikel (M) durch Schließen des zweiten Tors (10G) vorübergehend aufnimmt und die Artikel (M) stromabwärts durch Öffnen des zweiten Tors (10G) abgibt, wobei
der Feuchtigkeitsrückgewinnungsmechanismus (20) unter Verwendung einer Abdeckung konfiguriert ist, die eine Antriebseinheit (10D) schützt, die das zweite Tor (10G) antreibt.

4. Kombinationswiegevorrichtung (1) nach Anspruch 3, wobei der Feuchtigkeitsrückgewinnungsmechanismus (20) einen Innenzylinder (10A) eines Luftzylinders schützt, der die Antriebseinheit (10D) bildet.

5. Kombinationswiegevorrichtung (1) nach einem der Ansprüche 1 bis 4, wobei die Förderfläche (90) einen Vorsprung (9A) aufweist, der von einer Außenseite zu einer Innenseite der Abgaberutsche (9) vorsteht, und
die Öffnung (9D) an einem unteren Ende des Vorsprungs (9A) in einer Förderrichtung (D) der Artikel (M) ausgebildet ist.

## Revendications

1. Appareil de pesage combiné (1) comprenant :
un dispositif d'acheminement recevant des articles (M) provenant de l'extérieur, et acheminant les articles (M) en aval ;
une pluralité de trémies (6₁ à 6ₙ) comprenant des premiers clapets recevant provisoirement les articles (M) acheminés depuis le dispositif d'acheminement en fermant les premiers clapets (8₁ à 8ₙ), et refoulant les articles (M) en aval en ouvrant les premiers clapets (8₁ à 8ₙ),
un dispositif de saisie (7₁ à 7ₙ) saisissant une valeur de poids de l'article stocké dans chacune de la pluralité de trémies (6₁ à 6ₙ) ;
un module de commande (51) effectuant un calcul de combinaison en fonction d'une pluralité de valeurs de poids saisies par le dispositif de saisie (7₁ à 7ₙ), et déchargeant des trémies (6₁ à 6ₙ) une combinaison des articles (M) présentant une valeur de poids cible préétablie ;
une goulotte d'évacuation (9) recevant les articles (M) déchargés des trémies (6₁ à 6ₙ) possédant une surface d'acheminement (90) dotée d'une pluralité d'ouvertures (9D) plus petites que l'article, et déchargeant les articles (M) en aval tout en coulissant les articles (M) sur la surface d'acheminement (90) ; et
**caractérisé par** :
un mécanisme de récupération de l'humidité disposé sous les ouvertures de la goulotte d'évacuation (9), et récupérant l'humidité passant par les ouvertures dans la goulotte d'évacuation (9) de l'intérieur à l'extérieur de la surface d'acheminement (90), et tombant de la goulotte d'évacuation (9).

2. Appareil de pesage combiné (1) selon la revendication 1,
le mécanisme de récupération de l'humidité (20) s'étendant plus vers l'extérieur qu'une partie marginale extérieure (9E) d'une extrémité supérieure de la goulotte d'évacuation (9).

3. Appareil de pesage combiné (1) selon la revendication 1 ou la revendication 2, comprenant en outre un récipient collecteur (10) comprenant un deuxième clapet (10G), recevant provisoirement les articles (M) évacués par la goulotte d'évacuation (9) en fermant le deuxième clapet (10G), et déchargeant les articles (M) en ouvrant le deuxième clapet (10G),
le mécanisme de récupération de l'humidité (20) étant configuré avec un couvercle protégeant un dispositif d'entraînement (10D) qui entraîne le deuxième clapet (10G).

4. Appareil de pesage combiné (1) selon la revendication 3,
le mécanisme de récupération de l'humidité (20) protégeant un cylindre intérieur (10A) d'un cylindre pneumatique constituant le dispositif d'entraînement (10D).

5. Appareil de pesage combiné (1) selon une quelconque des revendications 1 à 4,
la surface d'acheminement (90) possédant une saillie (9A) dépassant d'un extérieur vers un intérieur de la goulotte d'évacuation (9), et
l'ouverture (9D) étant formée à une extrémité inférieure de la saillie (9A) dans le sens de l'acheminement (D) des articles (M).
